(19) Europäisches Patentamt
European Patent Office
Office européen des brevets

(11) EP 3 081 593 A1

(12) EUROPEAN PATENT APPLICATION
published in accordance with Art. 153(4) EPC

(43) Date of publication:
19.10.2016 Bulletin 2016/42

(21) Application number: 14869455.7

(22) Date of filing: 11.12.2014

(51) Int Cl.:
*C08L 53/02* (2006.01) *C08F 297/04* (2006.01)
*C08K 5/01* (2006.01) *C08L 101/00* (2006.01)

(86) International application number:
PCT/JP2014/082789

(87) International publication number:
WO 2015/087953 (18.06.2015 Gazette 2015/24)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 11.12.2013 JP 2013255855

(71) Applicants:
- Kuraray Co., Ltd.
Kurashiki-shi, Okayama 710-0801 (JP)
- Amyris, Inc.
Emeryville, CA 94608 (US)

(72) Inventors:
- TANAKA, Yusuke
Kamisu-shi
Ibaraki 314-0197 (JP)
- SASAKI, Hiromitsu
Kamisu-shi
Ibaraki 314-0197 (JP)
- UEHARA, Yosuke
Kamisu-shi
Ibaraki 314-0197 (JP)
- KONISHI, Daisuke
Kamisu-shi
Ibaraki 314-0197 (JP)

(74) Representative: Müller-Boré & Partner
Patentanwälte PartG mbB
Friedenheimer Brücke 21
80639 München (DE)

# (54) RESIN COMPOSITION, MOLDED ARTICLE, AND RESIN MODIFIER

(57) A resin composition including a hydrogenated block copolymer (A) including a polymer block (a) consisting of a structural unit derived from an aromatic vinyl compound and a polymer block (b) containing 1 to 100% by mass of a structural unit (b1) derived from farnesene and containing 99 to 0% by mass of a structural unit (b2) derived from a conjugated diene other than farnesene, 50 mol% or more of a carbon-carbon double bond in the polymer block (b) being hydrogenated; and at least one resin (B) selected from the group consisting of a polyphenylene ether-based resin, a styrene-based resin, an acrylic resin, a polycarbonate-based resin, and a polyamide-based resin.



Printed by Jouve, 75001 PARIS (FR)

## Description

TECHNICAL FIELD

The present invention relates to a resin composition including a hydrogenated block copolymer including a structural unit derived from an aromatic vinyl compound and a structural unit derived from farnesene, a molded article consisting of the resin composition, and a resin modifier including the hydrogenated block copolymer.

BACKGROUND ART

A modification technology of polymer has such an advantage that the development cost or development time can be greatly reduced, as compared with the development of a novel polymer on a basis of molecular design. For that reason, researches regarding the modification of polymers inclusive of polymers for automotive parts, electrical and electronic parts, and machine parts are keenly made in various fields.

However, there are a very little number of versatile polymer modifiers capable of being commonly used for many kinds of polymers. There are materials that exhibit a modification action on a specified polymer but when blended in another polymer, cause a lowering of fluidity, gelation, or the like, thereby not exhibiting that modification action.

In order to solve the foregoing problem, there is proposed a modifier for polymer including a block copolymer having a polyester block (I) and an addition polymer block (II) as a modifier for polymer capable of being commonly used for many kinds of polymers (PTL 1). In accordance with PTL 1, by adding the subject modifier for polymer to various polymers, impact resistance, tensile strength, tensile elongation, coatability, and the like can be enhanced.

In addition, there is also proposed a modifier for resin including a block copolymer having an aromatic vinyl-based polymer block and a polymer block having affinity with a polyester (PTL 2).

CITATION LIST

PATENT LITERATURE

PTL 1: JP 10-158409A
PTL 2: JP 2-199127A

SUMMARY OF INVENTION

TECHNICAL PROBLEM

Now, relatively hard resins, such as styrene-based resins, polycarbonate-based resins, etc., were required to improve fluidity or flexibility of resin for the purpose of enhancing handling properties at the time of molding processing. But, in the aforementioned modifier for polymer, its effect was limitative, and there was room for more improvements regarding flexibility and molding processability of the resulting resin composition.

An object of the present invention is to provide a resin composition including a specified hydrogenated block copolymer and having excellent flexibility and molding processability (fluidity) and a molded article including the subject resin composition. A second object of the present invention is to provide a novel resin modifier capable of enhancing flexibility and molding processability (fluidity) of a resin composition upon being mixed with a specified resin.

SOLUTION TO PROBLEM

The present inventors made extensive and intensive investigations. As a result, it has been found that a resin composition including a hydrogenation product of a block copolymer including a polymer block consisting of a structural unit derived from an aromatic vinyl compound and a polymer block containing a structural unit derived from farnesene is able to solve the foregoing problem, leading to accomplishment of the present invention.

Specifically, the gist of the present invention includes the following [1] to [3].

[1] A resin composition including a hydrogenated block copolymer (A) including a polymer block (a) consisting of a structural unit derived from an aromatic vinyl compound and a polymer block (b) containing 1 to 100% by mass of a structural unit (b1) derived from farnesene and containing 99 to 0% by mass of a structural unit (b2) derived from a conjugated diene other than farnesene, 50 mol% or more of a carbon-carbon double bond in the polymer block

(b) being hydrogenated; and at least one resin (B) selected from the group consisting of a polyphenylene ether-based resin, a styrene-based resin, an acrylic resin, a polycarbonate-based resin, and a polyamide-based resin.
[2] A molded article consisting of the aforementioned resin composition.
[3] A resin modifier including the following hydrogenated block copolymer (A), which is a resin modifier for at least one resin (B) selected from the group consisting of a polyphenylene ether-based resin, a styrene-based resin, an acrylic resin, a polycarbonate-based resin, and a polyamide-based resin.

[Hydrogenated block copolymer (A)]

A hydrogenated block copolymer including a polymer block (a) consisting of a structural unit derived from an aromatic vinyl compound and a polymer block (b) containing 1 to 100% by mass of a structural unit (b1) derived from farnesene and containing 99 to 0% by mass of a structural unit (b2) derived from a conjugated diene other than farnesene, 50 mol% or more of a carbon-carbon double bond in the polymer block (b) being hydrogenated.

ADVANTAGEOUS EFFECTS OF INVENTION

In accordance with the present invention, it is possible to provide a resin composition having excellent flexibility and molding processability (fluidity) and a molded article consisting of the subject resin composition. In addition, it is possible to provide a novel resin modifier capable of enhancing flexibility and molding processability (fluidity) of a resin composition upon being mixed with a specified resin.

DESCRIPTION OF EMBODIMENTS

[Resin composition]

The resin composition of the present invention includes a hydrogenated block copolymer (A) including a polymer block (a) consisting of a structural unit derived from an aromatic vinyl compound and a polymer block (b) containing 1 to 100% by mass of a structural unit (b1) derived from farnesene and containing 99 to 0% by mass of a structural unit (b2) derived from a conjugated diene other than farnesene, 50 mol% or more of a carbon-carbon double bond in the polymer block (b) being hydrogenated; and at least one resin (B) selected from the group consisting of a polyphenylene ether-based resin, a styrene-based resin, an acrylic resin, a polycarbonate-based resin, and a polyamide-based resin. In the resin composition of the present invention, the hydrogenated block copolymer (A) acts as a resin modifier of the resin (B), gives flexibility to the resulting resin composition, and enhances fluidity, and hence, its moldability can be enhanced.

<Hydrogenated block copolymer (A)>

The hydrogenated block copolymer (A) which is used for the resin composition of the present invention contains a polymer block (a) consisting of a structural unit derived from an aromatic vinyl compound and a polymer block (b) containing 1 to 100% by mass of a structural unit (b1) derived from farnesene and containing 99 to 0% by mass of a structural unit (b2) derived from a conjugated diene other than farnesene, 50 mol% or more of a carbon-carbon double bond in the polymer block (b) being hydrogenated.
The polymer block (a) is constituted of a structural unit derived from an aromatic vinyl compound. Examples of such an aromatic vinyl compound include styrene, α-methylstyrene, 2-methylstyrene, 3-methylstyrene, 4-methylstyrene, 4-propylstyrene, 4-t-butylstyrene, 4-cyclohexylstyrene, 4-dodecylstyrene, 2,4-dimethylstyrene, 2,4-diisopropylstyrene, 2,4,6-trimethylstyrene, 2-ethyl-4-benzylstyrene, 4-(phenylbutyl)styrene, 1-vinylnaphthalene, 2-vinylnaphthalene, vinylanthracene, N,N-diethyl-4-aminoethylstyrene, vinylpyridine, 4-methoxystyrene, monochlorostyrene, dichlorostyrene, divinylbenzene, and the like. These aromatic vinyl compounds may be used solely or in combination of two or more thereof. Among those, at least one selected from the group consisting of styrene, α-methylstyrene, and 4-methylstyrene is more preferred, and styrene is still more preferred.
The aforementioned polymer block (b) contains 1 to 100% by mass of a structural unit (b1) derived from farnesene and contains 99 to 0% by mass of a structural unit (b2) derived from a conjugated diene other than farnesene.
Although the structural unit (b1) may be a structural unit derived from either α-farnesene or β-farnesene represented by the following formula (I), it is preferably a structural unit derived from β-farnesene from the viewpoint of ease of production of the hydrogenerated block copolymer (A). α-farnesene and β-farnesene may be used in combination.

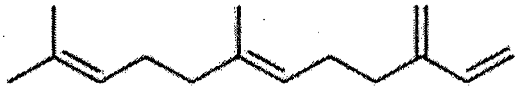

(I)

As for the structural unit (b2) derived from a conjugated diene other than farnesene, examples of the conjugated diene include butadiene, isoprene, 2,3-dimethylbutadiene, 2-phenyl-butadiene, 1,3-pentadiene, 2-methyl-1,3-pentadiene, 1,3-hexadiene, 1,3-octadiene, 1,3-cyclohexadiene, 2-methyl-1,3-octadiene, 1,3,7-octatriene, myrcene, chloroprene, and the like. These may be used solely or in combination of two or more thereof. Among those, at least one selected from the group consisting of butadiene, isoprene, and myrcene is more preferred, and at least one selected from butadiene and isoprene is still more preferred.

The polymer block (b) contains 1 to 100% by mass of the structural unit (b1) derived from farnesene and contains 99 to 0% by mass of the structural unit (b2) derived from a conjugated diene other than farnesene. When the content of the structural unit (b1) derived from farnesene is less than 1% by mass, a resin composition which has excellent molding processability and also provides a molded article with high flexibility may not be obtained. The content of the structural unit (b1) in the polymer block (b) is preferably 30 to 100% by mass, and more preferably 45 to 100% by mass. A material in which the content of the structural unit (b1) in the polymer block (b) is 100% by mass is also one of preferred embodiments. In the case where the polymer block (b) contains the structural unit (b2) derived from a conjugated diene other than farnesene, the content of the structural unit (b2) is preferably 70% by mass or less, and more preferably 55% by mass or less.

From the viewpoints of having excellent molding processability and also giving a molded article with high flexibility, a total content of the structural unit (b1) and the structural unit (b2) in the polymer block (b) is preferably 80% by mass or more, more preferably 90% by mass or more, still more preferably 95% by mass or more, yet still more preferably 99% by mass or more, and even yet more preferably 100% by mass.

The hydrogenated block copolymer (A) is a hydrogenation product of an unhydrogenated block copolymer (hereinafter also referred to as "block copolymer (P)") including at least one of each of the polymer block (a) and the polymer block (b). This hydrogenation product of the block copolymer (B) is preferably a hydrogenation product of the block copolymer (P) including two or more of the polymer blocks (a) and one or more of the polymer blocks (b).

A binding form between the polymer block (a) and the polymer block (b) is not particularly limited, and it may be a linear, branched or radial form or may be a combination of two or more thereof. Among those, a form where the respective blocks are bound in a linear form is preferred, and when the polymer block (a) is expressed by "a", and the polymer block (b) is expressed by "b", a binding form expressed by $(a\text{-}b)_1$, $a\text{-}(b\text{-}a)_m$, or $b\text{-}(a\text{-}b)_n$ is preferred. Each of 1, m, and n independently represents an integer of 1 or more.

As for the binding form, a triblock copolymer expressed by (a-b-a) is preferred from the viewpoints of molding processability, handling properties, and the like.

In the case where the block copolymer (P) has two or more of the polymer blocks (a) or two or more of the polymer blocks (b), the respective polymer blocks may be a polymer block containing the same structural unit or may be a polymer block containing different structural units from each other. For example, in the two polymer blocks (a) in the triblock copolymer expressed by [a-b-a], the respective aromatic vinyl compounds may be the same as or different from each other in terms of the kind thereof.

So long as the effect of the present invention is not impaired, the block copolymer (P) may contain a polymer block (c) constituted of other monomer, in addition to the aforementioned polymer block (a) and polymer block (b).

Examples of such other monomer include unsaturated hydrocarbon compounds, such as propylene, 1-butene, 1-pentene, 4-methyl-1-pentene, 1-hexene, 1-octene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, etc functional group-containing unsaturated compounds, such as acrylic acid, methacrylic acid, methyl acrylate, methyl methacrylate, acrylonitrile, methacrylonitrile, maleic acid, fumaric acid, crotonic acid, itaconic acid, 2-acryloylethanesulfonic acid, 2-methacryloylethanesulfonic acid, 2-acrylamide-2-methylpropanesulfonic acid, 2-methacrylamide-2-methylpropanesulfonic acid, vinylsulfonic acid, vinyl acetate, methyl vinyl ether, etc.; and the like. These may be used solely or in combination of two or more thereof.

In the case where the block copolymer (P) has the polymer block (c), its content is preferably 50% by mass or less, more preferably 40% by mass or less, still more preferably 30% by mass or less, and yet still more preferably 10% by mass or less.

A total content of the polymer block (a) and the polymer block (b) in the block copolymer (P) is preferably 50% by mass or more, more preferably 60% by mass or more, still more preferably 70% by mass or more, and yet still more preferably 90% by mass or more.

A mass ratio [(a)/(b)] of the polymer block (a) to the polymer block (b) in the hydrogenated block copolymer (A) is preferably 1/99 to 70/30. When the mass ratio [(a)/(b)] falls within the foregoing range, the hydrogenated block copolymer (A) has appropriate hardness and is well compatible with a resin (B) as described later, and hence, a resin composition

which is excellent in molding processability and also high in flexibility may be obtained. From the foregoing viewpoint, the mass ratio [(a)/(b)] of the polymer block (a) to the polymer block (b) is preferably 10/90 to 70/30, more preferably 10/90 to 60/40, still more preferably 15/85 to 55/45, and yet still more preferably 15/85 to 50/50.

A peak top molecular weight (Mp) of the hydrogenated block copolymer (A) is preferably 4,000 to 1,500,000, more preferably 9,000 to 1,200,000, still more preferably 30,000 to 1,000,000, yet still more preferably 50,000 to 800,000, even yet still more preferably 50,000 to 500,000, and especially preferably 70,000 to 400,000 from the viewpoint of molding processability. The peak top molecular weight (Mp) as referred to in the present specification means a value measured by the method described in the Examples as described later.

A molecular weight distribution (Mw/Mn) of the hydrogenated block copolymer (A) is preferably 1 to 4, more preferably 1 to 3, and still more preferably 1 to 2. When the molecular weight distribution falls within the foregoing range, scattering in viscosity of the hydrogenated block copolymer (A) is small, and handling is easy.

<Production method of hydrogenated block copolymer (A)>

The hydrogenated block copolymer (A) may be, for example, suitably produced by a polymerization step of obtaining the block copolymer (P) through anionic polymerization and a step of hydrogenating 50 mol% or more of the carbon-carbon double bond in the polymer block (b) in the block copolymer (P).

[Polymerization step]

The block copolymer (P) may be produced by a solution polymerization method, the method described in JP 2012-502135A or JP 2012-502136A, or the like. Among those, a solution polymerization method is preferred, and known methods, for example, an ionic polymerization method, such as anionic polymerization, cationic polymerization, etc., a radical polymerization method, etc., may be applied. Above all, an anionic polymerization method is preferred. According to the anionic polymerization method, an aromatic vinyl compound and farnesene and/or a conjugated diene other than farnesene are successively added in the presence of a solvent, an anionic polymerization initiator, and optionally a Lewis base, thereby obtaining the block copolymer (P).

Examples of the anionic polymerization initiator include alkali metals, such as lithium, sodium, potassium, etc.; alkaline earth metals, such as beryllium, magnesium, calcium, strontium, barium, etc.; lanthanide rare earth metals, such as lanthanum, neodymium, etc.; compounds containing the aforementioned alkali metal, alkaline earth metal or lanthanide rare earth metal; and the like. Among those, compounds containing an alkali metal or an alkaline earth metal, specifically organic alkali metal compounds are preferred.

Examples of the organic alkali metal compound include organic lithium compounds, such as methyllithium, ethyllithium, n-butyllithium, sec-butyllithium, t-butyllithium, hexyllithium, phenyllithium, stilbenelithium, dilithiomethane, dilithionaphthalene, 1,4-ditlihiobutane, 1,4-dilithio-2-ethylcyclohexane, 1,3,5-trilithiobenzene, etc.; sodium naphthalene; potassium naphthalene; and the like. Among those, organic lithium compounds are preferred, n-butyllithium and sec-butyllithium are more preferred, and sec-butyllithium is especially preferred. The organic alkali metal compound may also be used as an organic alkali metal amide through a reaction with a secondary amine, such as diisopropylamine, dibutylamine, dihexylamine, dibenzylamine, etc.

Although a use amount of the organic alkali metal compound which is used for the polymerization varies depending upon the molecular weight of the block copolymer (P), in general, it is in the range of from 0.01 to 3% by mass relative to the total amount of the aromatic vinyl compound, farnesene, and the conjugated diene other than farnesene.

The solvent is not particularly limited so long as it does not adversely affect the anionic polymerization reaction, and examples thereof include saturated aliphatic hydrocarbons, such as n-pentane, isopentane, n-hexane, n-heptane, isooctane, etc.; saturated alicyclic hydrocarbons, such as cyclopentane, cyclohexane, methylcyclopentane, etc.; aromatic hydrocarbons, such as benzene, toluene, xylene, etc.; and the like. These may be used solely or in combination of two or more thereof. A use amount of the solvent is not particularly limited.

In the production of the block copolymer (P), it is preferred to use a Lewis base. The Lewis base plays a role to control microstructures in the structural unit derived from farnesene and the structural unit derived from a conjugated diene other than farnesene. Examples of of such a Lewis base include ether compounds, such as dibutyl ether, diethyl ether, tetrahydrofuran, dioxane, ethylene glycol diethyl ether, etc.; pyridine; tertiary amines, such as N,N,N',N'-tetramethylethylenediamine, trimethylamine, etc.; alkali metal alkoxides, such as potassium t-butoxide, etc.; phosphine compounds; and the like. In the case of using a Lewis base, in general, its amount is preferably in the range of from 0.01 to 1,000 molar equivalents per mole of the anionic polymerization initiator.

A temperature of the polymerization reaction is in the range of generally from -80 to 150°C, preferably from 0 to 100°C, and more preferably from 10 to 90°C. The polymerization reaction may be performed in a batchwise mode or a continuous mode. The block copolymer (P) may be produced by feeding the respective monomers continuously or

intermittently into the polymerization reaction solution in such a manner that the existent amounts of the aromatic vinyl compound, farnesene and/or the conjugated diene other than farnesene in the polymerization reaction system fall within the specified ranges, or successively adding the respective monomers so as to have specified ratios in the polymerization reaction solution.

The polymerization reaction may be terminated by the addition of an alcohol, such as methanol, isopropanol, etc., as a polymerization terminator. The block copolymer (P) may be isolated by pouring the resulting polymerization reaction solution into a poor solvent, such as methanol, etc., to deposit the block copolymer (P), or by washing the polymerization reaction solution with water and separating the polymerization reaction product, followed by drying.

{Modified copolymer}

In the present invention, the block copolymer (P) may also be modified by introducing a functional group into the block copolymer (P) prior to a hydrogenation step as described later.

Examples of the functional group which may be introduced include an amino group, an alkoxysilyl group, a hydroxyl group, an epoxy group, a carboxyl group, a carbonyl group, a mercapto group, an isocyanate group, an acid anhydride, and the like.

Examples of the modification method of the block copolymer (P) include a method in which prior to adding a polymerization terminator, a modifying agent capable of reacting with a polymerization active terminal, such as a coupling agent, e.g., tin tetrachloride, tetrachlorosilane, dimethyldichlorosilane, dimethyldiethoxysilane, tetramethoxysilane, tetraethoxysilane, 3-aminopropyltriethoxysilane, tetraglycidyl-1,3-bisaminomethylcyclohexane, 2,4-tolylene diisocyanate, etc., a polymerization terminal modifying agent, e.g., 4,4'-bis(diethylamino)benzophenone, N-vinylpyrrolidone, etc., or other modifying agent described in JP 2011-132298A, is added. A material obtained by grafting maleic anhydride or the like on the copolymer after isolation may also be used.

A position at which the functional group is introduced may be either a polymerization terminal or side chain of the block copolymer (P). The aforementioned functional group may be introduced solely or in combination of two or more thereof. In general, an amount of the modifying agent is preferably in the range of from 0.01 to 10 molar equivalents to the anionic polymerization initiator.

[Hydrogenation step]

The hydrogenated block copolymer (A) may be obtained by subjecting the obtained block copolymer (P) or modified block copolymer (P) by the aforementioned method to a hydrogenation process. As a method of performing the hydrogenation, a known method may be adopted. For example, the hydrogenation reaction is performed by allowing a Ziegler catalyst; a nickel, platinum, palladium, ruthenium, or rhodium metal catalyst supported on carbon, silica, diatomaceous earth, or the like; an organic metal complex having a cobalt, nickel, palladium, rhodium, or ruthenium metal; or the like to exist as a hydrogenation catalyst in a solution in which the block copolymer (P) is dissolved in a solvent which does not affect the hydrogenation reaction. In the hydrogenation step, the hydrocarbon reaction may also be performed by adding the hydrogenation catalyst in a polymerization reaction solution containing the block copolymer (P) obtained by the production method of the block copolymer (P) as described above. In the present invention, palladium carbon having palladium supported on carbon is preferred.

In the hydrogenation reaction, a hydrogen pressure is preferably 0.1 to 20 MPa, a reaction temperature is preferably 100 to 200°C, and a reaction time is preferably 1 to 20 hours.

A hydrogenation rate of the carbon-carbon double bond in the polymer block (b) in the hydrogenated block copolymer (A) is 50 to 100 mol%. When the aforementioned hydrogenation rate is less than the foregoing range, it is difficult to obtain a resin composition which is excellent in molding processability and also excellent in flexibility. From the aforementioned viewpoint, the hydrogenation rate is preferably 70 to 100 mol%, more preferably 80 to 100 mol%, and still more preferably 85 to 100 mol%. The hydrogenation rate may be calculated by measuring $^{1}$H-NMR of the block copolymer (P) and the hydrogenated block copolymer (A) after the hydrogenation.

<Resin (B)>

The resin (B) which is used for the resin composition of the present invention is at least one resin selected from the group consisting of a polyphenylene ether-based resin, a styrene-based resin, an acrylic resin, a polycarbonate-based resin, and a polyamide-based resin. In the present invention, by containing the resin (B) in the hydrogenated block copolymer (A), a resin composition which is capable of giving flexibility and also is enhanced in fluidity, thereby enhancing molding processability, may be provided. In particular, in the case of using an acrylic resin as the resin (B), the flexibility, fluidity, and molding processability of the resin composition may be enhanced while keeping transparency of a molded article through a combined use with the hydrogenated block copolymer (A).

[Polyphenylene ether-based resin]

As the polyphenylene ether-based resin, for example, a resin having a structural unit represented by the following general formula (II) may be used.

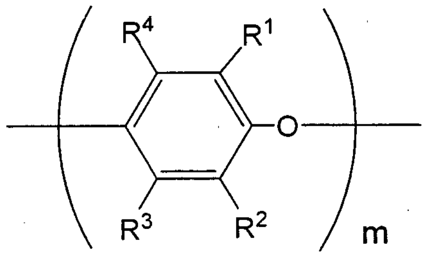

(II)

(In the formula, each of $R^1$, $R^2$, $R^3$, and $R^4$ independently represents a hydrogen atom, a halogen atom, a hydrocarbon group, a substituted hydrocarbon group, an alkoxy group, a cyano group, a phenoxy group, or a nitro group; and m represents an integer expressing a degree of polymerization.)

As the polyphenylene ether-based resin, those represented by the foregoing general formula (II), wherein $R^1$ and $R^2$ are an alkyl group, particularly an alkyl group having 1 to 4 carbon atoms, are preferred. In addition, those represented by the foregoing general formula (II), wherein $R^3$ and $R^4$ are a hydrogen atom or an alkyl group having 1 to 4 carbon atoms, are preferred.

Preferred specific examples of the polyphenylene ether-based resin include poly(2,6-dimethyl-1,4-phenylene) ether, poly(2,6-diethyl-1,4-phenylene) ether, poly(2-methyl-6-ethyl-1,4-phenylene) ether, poly(2-methyl-6-propyl-1,4-phenylene) ether, poly(2,6-dipropyl-1,4-phenylene) ether, poly(2-ethyl-6-propyl-1,4-phenylene) ether, poly(2,6-dimethoxy-1,4-phenylene) ether, poly(2,6-dichloromethyl-1,4-phenylene) ether, poly(2,6-dibromomethyl-1,4-phenylene) ether, poly(2,6-diphenyl-1,4-phenylene) ether, poly(2,6-ditolyl-1,4-phenylene) ether, poly(2,6-dichloro-1,4-phenylene) ether, poly(2,6-dibenzyl-1,4-phenylene) ether, poly(2,5-dimethyl-1,4-phenylene) ether, and the like. Among those, the polyphenylene ether-based resin is especially preferably poly(2,6-dimethyl-1,4-phenylene) ether. These may be modified with a modifying agent having a polar group. Examples of the polar group include an acid halide, a carbonyl group, an acid anhydride, an acid amide, a carboxylic acid ester, an acid azide, a sulfone group, a nitrile group, a cyano group, an isocyanic acid ester, an amino group, an imide group, a hydroxyl group, an epoxy group, an oxazoline group, a thiol group, and the like. These polyphenylene ether-based resins may be a mixture with a polystyrene resin.

A melt flow rate (MFR) of the polyphenylene ether-based resin at a temperature of 250°C and a load of 98 N is preferably 0.1 to 30 g/10 min, and more preferably 0.2 to 20 g/10 min.

[Styrene-based resin]

As the styrene-based resin, there are preferably exemplified a polyalkylstyrene, such as polystyrene, polymethylstyrene, polydimethylstyrene, poly(t-butylstyrene), etc.; a poly(halogenated styrene), such as polychlorostyrene, polybromostyrene, polyfluorostyrene, polyfluorostyrene, etc.; a poly(halogen-substituted alkylstyrene), such as polychloromethylstyrene, etc.; a polyalkoxystyrene, such as polymethoxystyrene, polyethoxystyrene, etc.; a polycarboxyalkylstyrene, such as polycarboxymethylstyrene, etc.; a poly(alkyl ether styrene), such as poly(vinylbenzyl propyl ether), etc.; a polyalkylsilylstyrene, such as polytrimethylsilylstyrene, etc.; poly(vinylbenzyldimethoxy phosphide); an acrylonitrile-butadiene-styrene copolymer; and the like.

Among those, polystyrene, polymethylstyrene, polydimethylstyrene, and an acrylonitrile-butadiene-styrene copolymer are preferred as the styrene-based resin.

A melt flow rate (MFR) of the styrene-based resin at a temperature of 200°C and a load of 49 N is preferably 1.0 to 100 g/10 min, and more preferably 2.0 to 50 g/10 min.

[Acrylic resin]

Examples of the acrylic resin include acrylic resins chiefly including a structural unit derived from a (meth)acrylic acid ester. A proportion of the structural unit derived from a (meth)acrylic acid ester in the acrylic resin is preferably 50% by mass or more, and more preferably 80% by mass or more.

Examples of the (meth)acrylic acid ester constituting the acrylic resin include alkyl esters of (meth)acrylic acid, such as methyl (meth)acrylate, ethyl (meth)acrylate, propyl (meth)acrylate, butyl (meth)acrylate, 2-ethylhexyl (meth)acrylate, etc. It is preferred that the acrylic resin has a structural unit derived from one or more selected from these (meth)acrylic acid esters.

The acrylic resin which is used in the present invention has one or more selected from structural units derived from an unsaturated monomer other than a (meth)acrylic acid ester, if desired. In the present invention, from the viewpoint of obtaining a resin composition which is excellent in molding processability and also excellent in flexibility, it is preferred to use a copolymer of methyl acrylate and methyl methacrylate.

A melt flow rate (MFR) of the acrylic resin at a temperature of 230°C and a load of 49 N is preferably 0.1 to 50 g/10 min, and more preferably 0.5 to 20 g/10 min.

[Polycarbonate-based resin]

Although the polycarbonate-based resin is not particularly limited, examples thereof include polycarbonate-based resins produced from a divalent phenol, such as bisphenol A, hydroquinone, 2,2-bis(4-hydroxyphenyl)pentane, 2,4-dihydroxydiphenylmethane, bis(2-hydroxyphenyl)methane, bis(4-hydroxyphenyl)methane, etc.; and a carbonate precursor, such as phosgene, a halogen formate, a carbonate, etc.

Among those, a polycarbonate-based resin produced by using bisphenol A as the divalent phenol and phosgene as the carbonate precursor is preferred from the viewpoint of ease in availability.

A melt flow rate (MFR) of the polycarbonate-based resin at a temperature of 300°C and a load of 21 N is preferably 0.1 to 100 g/10 min, and more preferably 1.0 to 60 g/10 min.

[Polyamide-based resin]

The polyamide-based resin is a resin having an amide bond, and examples thereof include homopolymers, such as polycaproamide (nylon-6), polyundecanamide (nylon-11), polylauryllactam (nylon-12), polyhexamethylene adipamide (nylon-6,6), polyhexanemethylene sebacamide (nylon-6,12), etc.; and copolymers, such as a caprolactam/lauryllactam copolymer (nylon-6/12), a caprolactam/aminoundecanoic acid copolymer (nylon-6/11), a caprolactam/ω-aminononanoic acid copolymer (nylon-6/9), a caprolactam/hexamethylene diammonium adipate copolymer (nylon-6/6,6), a caprolactam/hexamethylene diammonium adipate/hexamethylene diammonium sebacate copolymer (nylon-6/6,6/6,12), etc. These may be used solely or in combination of two or more thereof.

A melt flow rate (MFR) of the polyamide-based resin at a temperature of 230°C and a load of 21 N is preferably 1 to 100 g/10 min, and more preferably 2 to 70 g/10 min.

From the viewpoint of enhancing the modification effect of the hydrogenated block copolymer (A), a mass ratio [(A)/(B)] of the hydrogenated block copolymer (A) to the resin (B) is preferably 1/99 to 60/40, more preferably 5/95 to 55/45, still more preferably 5/95 to 51/49, yet still more preferably 5/95 to 35/65, and especially preferably 5/95 to 25/75. A content of the hydrogenated block copolymer (A) in the resin composition of the present invention is not particularly limited and may be properly adjusted according to the kind, physical properties, application, and the like of the resin (B) to be used.

By containing the hydrogenated block copolymer (A) in the resin composition of the present invention, the melt flow rate (MFR) of the resin composition containing the resin (B) may be adjusted within a desired range. In consequence, a suitable range of MFR of the resin composition of the present invention may be properly set up according to the kind, physical properties, and application of the resin (B) to be used, or the mass ratio of the hydrogenated block copolymer (A) to the resin (B), or the like.

<Optional components>

For the purpose of more enhancing the flexibility, the resin composition of the present invention may contain a softening agent (C). Examples of the softening agent (C) include paraffin-based, naphthene-based, or aromatic process oils; phthalic acid derivatives, such as dioctyl phthalate, dibutyl phthalate, etc.; white oil; mineral oils; liquid oligomers between ethylene and an α-olefin; liquid paraffins; polybutene; low molecular weight polyisobutylene; liquid polydienes, such as liquid polybutadiene, liquid polyisoprene, a liquid polyisoprene/butadiene copolymer, a liquid styrene/butadiene copolymer, a liquid styrene/isoprene copolymer, etc.; hydrogenation products thereof; and the like. Among those, from the viewpoint of compatibility with the hydrogenated block copolymer (A), paraffin-based process oils; liquid oligomers between ethylene and an α-olefin; and liquid paraffins are preferred.

In the case of containing the softening agent (C), from the viewpoint of enhancing the molding processability, a content of the softening agent (C) is preferably 0.1 to 300 parts by mass, and more preferably 1 to 150 parts by mass based on 100 parts by mass of the hydrogenated block copolymer (A).

So long as the effect of the present invention is not impaired, the resin composition of the present invention may further contain the following other components.

Examples of other components include an inorganic filler. Specific examples of such an inorganic filler include

talc, calcium carbonate, silica, a glass fiber, a carbon fiber, mica, kaolin, titanium oxide, and the like. Among those, talc is preferred.

Furthermore, to the resin composition of the present invention, additives other than those described above, for example, a thermal anti-aging agent, an antioxidant, a light stabilizer, an antistatic agent, a mold releasing agent, a flame retardant, a foaming agent, a pigment, a dye, a brightening agent, and the like.

In the case of using the aforementioned other component, a content of the other component in the resin composition of the present invention is preferably 30% by mass or less, more preferably 20% by mass or less, and still more preferably 10% by mass or less.

<Production method of resin composition>

A production method of the resin composition of the present invention is not particularly limited, and examples thereof include a method in which the hydrogenated block copolymer (A), the resin (B), and optionally other arbitrary component(s) are pre-blended and collectively mixed, and the mixture is then melt kneaded using a single-screw extruder, a multi-screw extruder, a Banbury mixer, a heating roll, a kneader of every kind, or the like; a method in which the hydrogenated block copolymer (A), the resin (B), and optionally other arbitrary component(s) are fed from separate charge ports and then melt kneaded; and the like. As a pre-blending method, there is exemplified a method of using a mixing machine, such as a Henschel mixer, a high-speed mixer, a V blender, a ribbon blender, a tumbler blender, a conical blender, etc. A temperature at the time of melt kneading may be preferably arbitrarily selected within the range of from 150°C to 300°C.

[Molded article]

The molded article of the present invention is one consisting of the resin composition of the present invention.

A shape of the molded article may be any shape so long as the molded article may be produced by using the resin composition of the present invention, and the resin composition of the present invention may be, for example, molded in various shapes, such as a pellet, a film, a sheet, a plate, a pipe, a tube, a rod-like body, a granular body, etc. A production method of this molded article is not particularly limited, and molding may be performed by various conventional molding methods, for example, injection molding, blow molding, press molding, extrusion molding, calender molding, or the like. The resin composition of the present invention is excellent in molding processability, and hence, a molded article may be suitably obtained by means of high cycle injection molding.

The resin composition and the molded article of the present invention are excellent in flexibility and molding processability, and hence, they may be suitably used as a molded article, such as an adhesive agent, a sheet, a film, a tube, a hose, a belt, etc. Specifically, the resin composition and the molded article of the present invention may be suitably used for adhesive materials, such as hot melt adhesive, an adhesive tape, an adhesive layer of a protective film, etc.; various vibration absorbing or damping members, such as damping rubber, a mat, a sheet, a cushion, a damper, a pad, a mount rubber, etc.; footwear, such as sport shoes, fashion sandals, etc.; house electrical appliance parts, such as a television set, a stereo audio set, a cleaner, a refrigerator, etc.; building materials, such as a packing for sealing a door and a window frame of a building, etc.; automotive interior and exterior parts, such as a bumper part, a body panel, a weather strip, a grommet, a skin material of instrument panel, etc., an air-bag cover, etc.; grip members of scissors, a screwdriver, a toothbrush, ski pole, etc.; food wrapping materials, such as a wrapping film for foods, etc.; medical devices, such as an infusion solution bag, a syringe, a catheter, etc.; stoppers and cap liners for a container for storing foods, beverages, drugs, etc.; and the like.

[Resin modifier]

The modifier of the present invention includes the aforementioned hydrogenated block copolymer (A) and is a resin modifier for at least one resin (B) selected from the group consisting of a polyphenylene ether-based resin, a styrene-based resin, an acrylic resin, a polycarbonate-based resin, and a polyamide-based resin.

By mixing the resin modifier of the present invention and the aforementioned resin (B), not only the flexibility may be given to the resin composition, but also the fluidity is enhanced. Thus, it is possible to obtain a resin composition with excellent molding processability.

A preferred embodiment of the hydrogenated block copolymer (A), a preferred embodiment of the resin (B), and a preferred embodiment of the mass ratio of the hydrogenated block copolymer (A) to the resin (B) are the same as the preferred embodiments described in the section of the resin composition of the present invention as described above.

EXAMPLES

The present invention is hereunder described by reference to Examples, but it should not be construed that the present invention is limited to these Examples. β-farnesene (purity: 97.6% by mass, manufactured by Amyris, Inc.) was used for the following polymerization after purification with a molecular sieve of 3 angstroms and then distillation in a nitrogen atmosphere to remove hydrocarbon-based impurities inclusive of zingiberene, bisabolene, farnesene epoxide, farnesol isomers, E,E-farnesol, squalene, ergosterol, several kinds of dimers of farnesene, and the like.
Respective components used in the Examples and Comparative Examples are as follows.

<Hydrogenated block copolymer (A)>

· Hydrogenated block copolymers (A-1) to (A-7) of Production Examples 1 to 7 as described later

<Hydrogenated block copolymer (A')>

· Hydrogenated block copolymers (A'-1) and (A'-2) of Production Examples 8 and 9 as described later

<Polyphenylene ether-based resin (B-1)>

· Modified polyphenylene ether; "PPO534" (MFR: 0.3 g/10 min [250°C, 98 N]), manufactured by SABIC

<Styrene-based resin (B-2)>

· Polystyrene; "Toyo Styrene G210C" (MFR: 8.0 g/10 min [200°C, 49 N]), manufactured by Toyo Styrene Co., Ltd.

<Acrylic resin (B-3)>

·Methyl acrylate-methyl methacrylate copolymer; "PARAPET EH" (MFR: 1.8 g/10 min [230°C, 49 N]), manufactured by Kuraray Co., Ltd.

<Acrylic resin (B-3-2)>

· Methyl acrylate-methyl methacrylate copolymer; "PLEXIGLAS 6N" (MFR: 12 g/10 min [230°C, 49 N]), manufactured by Evonik Industries AG

<Polycarbonate-based resin (B-4)>

· Polycarbonate; "Iupilon S3000R" (MFR: 32 g/10 min [300°C, 21 N]), manufactured by Mitsubishi Engineering-Plastics Corporation

<Polyamide-based resin (B-5)>

· Nylon 6; "UBE Nylon 1013B" (MFR: 39 g/10 min [230°C, 21 N]), manufactured by Ube Industries, Ltd.

<Styrene-based resin (acrylonitrile-butadiene-styrene copolymer) (B-6)>

· Acrylonitrile-butadiene-styrene; "TOYOLAC 700-314" (MFR: 20 g/10 min [220°C, 98 N] and 2.6 g/10 min [200°C, 49 N]), manufactured by Toray Industries, Inc.
Softening agent (C-1): "Diana Process Oil PW-90" (hydrogenated paraffin-based oil, kinetic viscosity: 95 $mm^2/s$ (40°C), manufactured by Idemitsu Kosan Co., Ltd.)
(1) Measurement method of molecular weight distribution and peak top molecular weight (Mp):

A peak top molecular weight (Mp) and a molecular weight distribution (Mw/Mn) of a hydrogenated block copolymer were determined in terms of a molecular weight as converted into standard polystyrene by means of GPC (gel permeation chromatography), and a peak top molecular weight (Mp) was determined from a position of an apex of the peak of the molecular weight distribution. Measurement apparatus and conditions are as follows.

- Apparatus: GPC apparatus "GPC8020", manufactured by Tosoh Corporation
- Separation column: "TSKgel G4000HXL", manufactured by Tosoh Corporation
- Detector: "RI-8020", manufactured by Tosoh Corporation
- Solvent: Tetrahydrofuran
- solvent flow rate: 1.0 mL/min
- Sample concentration: 5 mg/10 mL
- Column temperature: 40°C

(2) Measurement method of hydrogenation rate:

A block copolymer (P) before hydrogenation and a hydrogenated block copolymer (A) after hydrogenation obtained in each of the Production Examples were each dissolved in deuterochloroform and measured for $^1$H-NMR at 50°C by using "Lambda-500", manufactured by JEOL Ltd. A hydrogenation rate of a polymer block (b) in the hydrogenated block copolymer (A) was calculated from peaks of protons which a carbon-carbon double bond had, the peaks appearing at 4.5 to 6.0 ppm of the resulting spectrum, according to the following equation.

Hydrogenation rate = {1 - (Molar number of carbon-carbon double bond contained per mole of the hydrogenated block copolymer (A))/(Molar number of carbon-carbon double bond contained per mole of the block copolymer (P))} × 100 (mol%)

(3) Measurement method of melt flow rate (MFR):

A resin composition obtained in each of the Examples and Comparative Examples was measured with Melt Indexer L244 (manufactured by Technol Seven Co., Ltd.) under conditions of temperature and load described below. The higher the MFR value, the more excellent the molding processability is.

<Measurement temperature and load>

- Resin composition containing a polyphenylene ether-based resin: 250°C, 98 N
- Resin composition containing a styrene-based resin: 200°C, 49 N
- Resin composition containing an acrylic resin: 230°C, 49 N
- Resin composition containing a polycarbonate-based resin: 300°C, 21 N
- Resin composition containing a polyamide-based resin: 230°C, 21 N
- Resin composition containing an acrylonitrile-butadiene-styrene copolymer: 220°C, 98 N
- Resin composition containing a polycarbonate-based resin and an acrylonitrile-butadiene-styrene copolymer: 250°C, 21 N

(4) Measurement method of flexural modulus:

A resin composition obtained in each of the Examples and Comparative Examples was subjected to compression molding at a temperature described below and at 10 MPa for 3 minutes, thereby obtaining a molded article (length: 60 mm, width: 10 mm, thickness: 3 mm). This test piece was used and measured for flexural modulus under a temperature condition at 23°C and a test speed of 2 mm/min by using an instron universal testing machine in conformity with JIS K7171. The lower the flexural modulus, the more excellent the flexibility is. <Molding temperature>

- Resin composition containing a polyphenylene ether-based resin: 280°C
- Resin composition containing a styrene-based resin: 210°C
- Resin composition containing an acrylic resin: 230°C
- Resin composition containing a polycarbonate-based resin: 250°C
- Resin composition containing a polyamide-based resin: 250°C
- Resin composition containing an acrylonitrile-butadiene-styrene copolymer: 240°C
- Resin composition containing a polycarbonate-based resin and an acrylonitrile-butadiene-styrene copolymer:

260°C

(5) Measurement method of total light transmittance:

Each of resin compositions obtained in Example 20 and Comparative Example 9 was subjected to compression molding at 10 MPa for 3 minutes, thereby obtaining a molded article (length: 15 mm, width: 15 mm, thickness: 2 mm). This molded article was measured for total light transmittance by using a haze meter ("HR-100", manufactured by Murakami Color Research Laboratory Co., Ltd.) in conformity with JIS K7375.

<Hydrogenated block copolymers (A) and (A')>

[Production Example 1]

50.0 kg of cyclohexane as a solvent and 35.1 g of a 10.5% by mass cyclohexane solution of sec-butyllithium (content of sec-butyllithium: 3.7 g) as an anionic polymerization initiator were charged in a nitrogen-purged, dried pressure container. After the temperature was raised to 50°C, 1.87 kg of styrene (1) was added to perform polymerization for 1 hour; subsequently, 8.75 kg of β-farnesene, was added to perform polymerization for 2 hours; and additionally, 1.87 kg of styrene (2) was added to perform polymerization for 1 hour. There was thus obtained a reaction solution containing a polystyrene-poly(β-farnesene)-polystyrene triblock copolymer. To this reaction solution, palladium carbon (palladium supporting amount: 5% by mass) as a hydrogenation catalyst was added in an amount of 5% by mass relative to the block copolymer to perform a reaction under conditions at a hydrogen pressure of 2 MPa and at 150°C for 10 hours. After allowing to stand for cooling and allowing to stand for pressure discharge, the palladium carbon was removed by means of filtration, and the filtrate was concentrated and further dried in vacuo. There was thus obtained a hydrogenation product of a polystyrene-poly(β-farnesene)-polystyrene triblock copolymer (hereinafter referred to as "hydrogenated block copolymer (A-1)"). The hydrogenated block copolymer (A-1) was subjected to the aforementioned evaluations. The results are shown in Table 1.

[Production Examples 2 to 8]

Hydrogenated block copolymers (A-2) to (A-7) and (A'-1) were produced in the same manner as in Production Example 1, except for following the blending shown in Table 1. The obtained hydrogenated block copolymers (A-2) to (A-7) and (A'-1) were each subjected to the aforementioned evaluations. The results are shown in Table 1.

[Production Example 9]

A hydrogenated block copolymer (A'-2) was produced in the same manner as in Production Example 1, except for mixing 50.0 kg of cyclohexane as a solvent with 108 g of tetrahydrofuran and following the blending shown in Table 1. The obtained hydrogenated block copolymer (A'-2) was subjected to the aforementioned evaluations. The results are shown in Table 1.

Table 1

| | | Production Example | | | | | | | | |
|---|---|---|---|---|---|---|---|---|---|---|
| | | 1 | 2 | 3 | 4 | 5 | 6 | 7 | 8 | 9 |
| | | (A-1) | (A-2) | (A-3) | (A-4) | (A-5) | (A-6) | (A-7) | (A'-1) | (A'-2) |
| Use amount [kg] | Cyclohexane | 50.0 | 50.0 | 50.0 | 50.0 | 50.0 | 50.0 | 50.0 | 50.0 | 50.0 |
| | sec-Butyllithium | 0.0369 | 0.0413 | 0.0155 | 0.0212 | 0.023 | 0.0922 | 0.069 | 0.031 | 0.0303 |
| | Styrene (1) | 1.87 | 1.12 | 1.32 | 1.32 | 1.32 | 1.87 | 0.79 | 1.32 | 1.5 |
| | Styrene (2) | 1.87 | 1.12 | 1.32 | 1.32 | 1.32 | 1.87 | 0.79 | 1.32 | 1.5 |
| | β-Farnesene | 8.75 | 10.25 | 6.18 | 3.09 | 3.44 | 4.88 | 4.03 | - | - |
| | Butadiene | - | - | - | - | 2.73 | 3.87 | 3.20 | 5.82 | 2.73 |
| | Isoprene | - | - | - | 3.09 | - | - | - | - | 3.44 |
| (b1)/(b) [% by mass] | | 100 | 100 | 100 | 50 | 56 | 56 | 50 | 0 | 0 |
| (a)/(b) [mass ratio] | | 30/70 | 18/82 | 30/70 | 30/70 | 30/70 | 30/70 | 18/82 | 34/66 | 30/70 |
| Content of triblock body [% by mass] | | 100 | 100 | 100 | 100 | 100 | 100 | 100 | 100 | 100 |
| Physical properties | Peak top molecular weight | 222,000 | 200,500 | 373,000 | 327,000 | 350,000 | 123,000 | 122,000 | 286,000 | 262,000 |
| | Molecular weight distribution (Mw/Mn) | 1.14 | 1.23 | 1.40 | 1.12 | 1.13 | 1.04 | 1.05 | 1.06 | 1.05 |
| | Hydrogenation rate [%] | 90.6 | 92.8 | 87.6 | 98 | 99.0 | 99.0 | 98.5 | 98 | 98 |

[Examples 1 to 10 and Comparative Examples 1 to 6: Resin compositions containing a polyphenylene ether-based resin]

Each of the hydrogenated block copolymers (A-1) to (A-6) and (A'-1) and (A'-2) and the polyphenylene ether-based resin (B-1) were dry blended in the blending shown in each of Tables 2 and 3, and the blend was melt kneaded at a cylinder temperature of 310°C and a screw rotation number of 200 rpm by using a twin-screw extruder ("TEX-44XCT", manufactured by The Japan Steel Works, Ltd.). The resultant was extruded in a strand form and then cut. There were thus obtained resin compositions containing a polyphenylene ether-based resin. The obtained resin compositions were each subjected to the aforementioned evaluations. The results are shown in Tables 2 and 3.

Table 2

| | | Example | | | | | | | | Comparative Example | | | |
|---|---|---|---|---|---|---|---|---|---|---|---|---|---|
| | | 1 | 2 | 3 | 4 | 5 | 6 | 7 | 8 | 1 | 2 | 3 | 4 |
| Component (A) | (A-1) | 10 | | | | | | | | | | | |
| | (A-2) | | 10 | | 20 | | | | | | | | |
| | (A-3) | | | 10 | | 20 | | | | | | | |
| | (A-4) | | | | | | 20 | | | | | | |
| | (A-5) | | | | | | | 20 | | | | | |
| | (A-6) | | | | | | | | 20 | | | | |
| Component (A') | (A'-1) | | | | | | | | | 10 | | 20 | |
| | (A'-2) | | | | | | | | | | 10 | | 20 |
| Component (B) | (B-1) | 90 | 90 | 90 | 80 | 80 | 80 | 80 | 80 | 90 | 90 | 80 | 80 |
| Evaluation | MFR [g/10 min] | 1.6 | 2 | 1.3 | 6 | 3.6 | 1.5 | 1.5 | 4 | 0.4 | 0.3 | 0.4 | 0.2 |
| | Flexural modulus [MPa] | 1790 | 1300 | 1780 | 660 | 980 | 1540 | 1700 | 730 | 1900 | 1950 | 1750 | 1850 |

Table 3

| | | Example | | Comparative Example | |
|---|---|---|---|---|---|
| | | 9 | 10 | 5 | 6 |
| Component (A) | (A-1) | | | | |
| | (A-2) | | | | |
| | (A-3) | | | | |
| | (A-4) | 50 | | | |
| | (A-5) | | 50 | | |
| Component (A') | (A'-1) | | | 50 | |
| | (A'-2) | | | | 50 |
| Component (B) | (B-1) | 50 | 50 | 50 | 50 |
| Evaluation | MFR [g/10 min] | 1.8 | 1.8 | 0.2 | 0.2 |
| | Flexural modulus [MPa] | 570 | 500 | 830 | 900 |

From the results of the foregoing Tables 2 and 3, in the case of making comparison in terms of the same content of the polyphenylene ether-based resin, in Examples 1 to 10, the melt flow rate is a high value, and the flexural modulus is a low value, as compared with Comparative Examples 1 to 6, and hence, it is noted that Examples 1 to 10 are excellent in moldability and flexibility.

[Examples 11 to 14 and Comparative Example 7: Resin compositions containing a styrene-based resin]

Each of the hydrogenated block copolymers (A-1) to (A-3), (A-5), and (A'-1) and the styrene-based resin (B-2) were dry blended in the blending shown in Table 4, and the blend was melt kneaded at a cylinder temperature of 210°C and a screw rotation number of 200 rpm by using a twin-screw extruder ("TEX-44XCT", manufactured by The Japan Steel Works, Ltd.). The resultant was extruded in a strand form and then cut. There were thus obtained resin compositions containing a styrene-based resin. The obtained resin compositions were each subjected to the aforementioned evaluations. The results are shown in Table 4.

Table 4

| | | Example | | | | Comparative Example |
|---|---|---|---|---|---|---|
| | | 11 | 12 | 13 | 14 | 7 |
| Component (A) | (A-1) | 20 | | | | |
| | (A-2) | | 20 | | | |
| | (A-3) | | | 20 | | |
| | (A-5) | | | | 20 | |
| Component (A') | (A'-1) | | | | | 20 |
| Component (B) | (B-2) | 80 | 80 | 80 | 80 | 80 |
| Evaluation | MFR [g/10 min] | 10 | 13 | 14 | 3.7 | 2.6 |
| | Flexural modulus [MPa] | 1730 | 1680 | 1700 | 1780 | 1850 |

From the results of the foregoing Table 4, in Examples 11 to 14, the melt flow rate is a high value, and the flexural modulus is a low value, as compared with Comparative Example 7, and hence, it is noted that Examples 11 to 14 are excellent in moldability and flexibility.

[Examples 15 to 22 and Comparative Examples 8 and 9: Resin compositions containing an acrylic resin]

Each of the hydrogenated block copolymers (A-1) to (A-3), (A-5), (A-7), and (A'-1), each of the acrylic resins (B-3) and (B-3-2), and the softening agent (C-1) were dry blended in the blending shown in each of Tables 5 and 6, and the blend was melt kneaded at a cylinder temperature of 240°C and a screw rotation number of 200 rpm by using a twin-screw extruder ("TEX-44XCT", manufactured by The Japan Steel Works, Ltd.). The resultant was extruded in a strand form and then cut. There were thus obtained resin compositions containing an acrylic resin. The obtained resin compositions were each subjected to the aforementioned evaluations. The results are shown in Tables 5 and 6.

Table 5

| | | Example | | | | | | | Comparative Example |
|---|---|---|---|---|---|---|---|---|---|
| | | 15 | 16 | 17 | 18 | 19 | 20 | 21 | 8 |
| Component (A) | (A-1) | 20 | | | | | | | |
| | (A-2) | | 20 | | | | 20 | | |
| | (A-3) | | | 20 | | | | 20 | |
| | (A-5) | | | | 20 | | | | |
| | (A-7) | | | | | 20 | | | |
| Component (A') | (A'-1) | | | | | | | | 20 |
| Component (B) | (B-3) | 80 | 80 | 80 | 80 | 80 | 75 | 70 | 80 |
| Component (C) | (C-1) | | | | | | 5 | 10 | |
| Evaluation | MFR [g/10 min] | 12 | 12 | 38 | 2 | 21 | 19 | 72 | 1.2 |
| | Flexural modulus [MPa] | 1620 | 1710 | 720 | 1790 | 1170 | 1530 | 450 | 1920 |

Table 6

| | | Example | Comparative Example |
|---|---|---|---|
| | | 22 | 9 |
| Component (A) | (A-2) | 10 | |
| Component (A') | (A'-1') | | 10 |
| Component (B) | (B-3-2) | 90 | 90 |
| Evaluation | MFR [g/10 min] | 8 | 7 |
| | Flexural modulus [MPa] | 2500 | 2670 |
| | Total light transmittance [%] | 88 | 76 |

From the results of the foregoing Table 5, in Examples 15 to 21, the melt flow rate is a high value, and the flexural modulus is a low value, as compared with Comparative Example 8, and hence, it is noted that Examples 15 to 21 are excellent in moldability and flexibility. In addition, from the results of the foregoing Table 6, it is noted that as compared with Comparative Example 9, the molded article obtained from the resin composition of Example 22 is high in the value of total light transmittance and excellent in transparency. From this matter, it is noted that in using, as the modifier for the acrylic resin, the hydrogenated block copolymer (A) which is used in the present invention, it is possible to enhance the moldability and flexibility without impairing the transparency.

[Examples 23 to 27 and Comparative Example 10: Resin compositions containing a polycarbonate-based resin]

Each of the hydrogenated block copolymers (A-1) to (A-5) and (A'-1) and the polycarbonate-based resin (B-4) were dry blended in the blending shown in Table 7, and the blend was melt kneaded at a cylinder temperature of 280°C and a screw rotation number of 200 rpm by using a twin-screw extruder ("TEX-44XCT", manufactured by The Japan

Steel Works, Ltd.). The resultant was extruded in a strand form and then cut. There were thus obtained resin compositions containing a polycarbonate-based resin. The obtained resin compositions were each subjected to the aforementioned evaluations. The results are shown in Table 7.

Table 7

| | | Example | | | | | Comparative Example |
|---|---|---|---|---|---|---|---|
| | | 23 | 24 | 25 | 26 | 27 | 10 |
| Component (A) | (A-1) | 20 | | | | | |
| | (A-2) | | 20 | | | | |
| | (A-3) | | | 20 | | | |
| | (A-4) | | | | 20 | | |
| | (A-5) | | | | | 20 | |
| Component (A') | (A'-1) | | | | | | 20 |
| Component (B) | (B-4) | 80 | 80 | 80 | 80 | 80 | 80 |
| Evaluation | MFR [g/10 min] | 79 | 52 | 80 | 29 | 25 | 19 |
| | Flexural modulus [MPa] | 1300 | 1250 | 1260 | 1120 | 960 | 1410 |

From the results of the foregoing Table 7, in Examples 23 to 27, the melt flow rate is a high value, and the flexural modulus is a low value, as compared with Comparative Example 10, and hence, it is noted that Examples 23 to 27 are excellent in moldability and flexibility.

[Examples 28 to 31 and Comparative Example 11: Resin compositions containing a polyamide-based resin]

Each of the hydrogenated block copolymers (A-1) to (A-3), (A-5), and (A'-1) and the polyamide-based resin (B-5) were dry blended in the blending shown in Table 8, and the blend was melt kneaded at a cylinder temperature of 260°C and a screw rotation number of 200 rpm by using a twin-screw extruder ("TEX-44XCT", manufactured by The Japan Steel Works, Ltd.). The resultant was extruded in a strand form and then cut. There were thus obtained resin compositions containing a polyamide-based resin. The obtained resin compositions were each subjected to the aforementioned evaluations. The results are shown in Table 8.

Table 8

| | | Example | | | | Comparative Example |
|---|---|---|---|---|---|---|
| | | 28 | 29 | 30 | 31 | 11 |
| Component (A) | (A-1) | 20 | | | | |
| | (A-2) | | 20 | | | |
| | (A-3) | | | 20 | | |
| | (A-5) | | | | 20 | |
| Component (A') | (A'-1) | | | | | 20 |
| Component (B) | (B-5) | 80 | 80 | 80 | 80 | 80 |
| Evaluation | MFR [g/10 min] | 26 | 24 | 24 | 20 | 15 |
| | Flexural modulus [MPa] | 1020 | 990 | 1050 | 1090 | 1240 |

From the results of the foregoing Table 8, in Examples 28 to 31, the melt flow rate is a high value, and the flexural modulus is a low value, as compared with Comparative Example 11, and hence, it is noted that Examples 28 to 31 are excellent in moldability and flexibility.

[Examples 32 to 36 and Comparative Example 12: Resin compositions containing an acrylonitrile-butadiene-styrene copolymer]

Each of the hydrogenated block copolymers (A-1) to (A-5) and (A'-1) and the acrylonitrile-butadiene-styrene copolymer (B-6) were dry blended in the blending shown in Table 9, and the blend was melt kneaded at a cylinder temperature of 240°C and a screw rotation number of 200 rpm by using a twin-screw extruder ("TEX-44XCT", manufactured by The Japan Steel Works, Ltd.). The resultant was extruded in a strand form and then cut. There were thus obtained resin compositions containing an acrylonitrile-butadiene-styrene copolymer. The obtained resin compositions were each subjected to the aforementioned evaluations. The results are shown in Table 9.

Table 9

| | | Example | | | | | Comparative Example |
|---|---|---|---|---|---|---|---|
| | | 32 | 33 | 34 | 35 | 36 | 12 |
| Component (A) | (A-1) | 20 | | | | | |
| | (A-2) | | 20 | | | | |
| | (A-3) | | | 20 | | | |
| | (A-4) | | | | 20 | | |
| | (A-5) | | | | | 20 | |
| Component (A') | (A'-1) | | | | | | 20 |
| Component (B) | (B-6) | 80 | 80 | 80 | 80 | 80 | 80 |
| Evaluation | MFR [g/10 min] | 3.9 | 5.5 | 3.6 | 2.2 | 2.1 | 1.5 |
| | Flexural modulus [MPa] | 1350 | 1330 | 1320 | 1270 | 1320 | 1450 |

From the results of the foregoing Table 9, in Examples 32 to 36, the melt flow rate is a high value, and the flexural modulus is a low value, as compared with Comparative Example 12, and hence, it is noted that Examples 32 to 36 are excellent in moldability and flexibility.

[Examples 37 to 40 and Comparative Example 13: Resin compositions containing a polycarbonate-based resin and an acrylonitrile-butadiene-styrene copolymer]

Each of the hydrogenated block copolymers (A-1) to (A-3), (A-5), and (A'-1), the polycarbonate-based resin (B-4), and the acrylonitrile-butadiene-styrene copolymer (B-6) were dry blended in the blending shown in Table 10, and the blend was melt kneaded at a cylinder temperature of 260°C and a screw rotation number of 200 rpm by using a twin-screw extruder ("TEX-44XCT", manufactured by The Japan Steel Works, Ltd.). The resultant was extruded in a strand form and then cut. There were thus obtained resin compositions containing a polycarbonate-based resin and an acrylonitrile-butadiene-styrene copolymer. The obtained resin compositions were each subjected to the aforementioned evaluations. The results are shown in Table 10.

Table 10

| | | Example | | | | Comparative Example |
|---|---|---|---|---|---|---|
| | | 37 | 38 | 39 | 40 | 13 |
| Component (A) | (A-1) | 20 | | | | |
| | (A-2) | | 20 | | | |
| | (A-3) | | | 20 | | |
| | (A-5) | | | | 20 | |
| Component (A') | (A'-1) | | | | | 20 |
| Component (B) | (B-4) | 70 | 70 | 70 | 70 | 70 |
| | (B-6) | 30 | 30 | 30 | 30 | 30 |

(continued)

| | | Example | | | | Comparative Example |
|---|---|---|---|---|---|---|
| | | 37 | 38 | 39 | 40 | 13 |
| Evaluation | MFR [g/10 min] | 17 | 17 | 20 | 11 | 9 |
| | Flexural modulus [MPa] | 1270 | 1200 | 1120 | 1200 | 1420 |

From the results of the foregoing Table 10, in Examples 37 to 40, the melt flow rate is a high value, and the flexural modulus is a low value, as compared with Comparative Example 13, and hence, it is noted that Examples 37 to 40 are excellent in moldability and flexibility.

## Claims

1. A resin composition comprising a hydrogenated block copolymer (A) including a polymer block (a) consisting of a structural unit derived from an aromatic vinyl compound and a polymer block (b) containing 1 to 100% by mass of a structural unit (b1) derived from farnesene and containing 99 to 0% by mass of a structural unit (b2) derived from a conjugated diene other than farnesene, 50 mol% or more of a carbon-carbon double bond in the polymer block (b) being hydrogenated and at least one resin (B) selected from the group consisting of a polyphenylene ether-based resin, a styrene-based resin, an acrylic resin, a polycarbonate-based resin, and a polyamide-based resin.

2. The resin composition according to claim 1, wherein the farnesene is β-farnesene.

3. The resin composition according to claim 1 or 2, wherein a mass ratio [(A)/(B)] of the hydrogenated block copolymer (A) to the resin (B) is 1/99 to 60/40.

4. The resin composition according to any of claims 1 to 3, wherein a peak top molecular weight (Mp) of the hydrogenated block copolymer (A) is 4,000 to 1,500,000.

5. The resin composition according to any of claims 1 to 4, wherein a molecular weight distribution (Mw/Mn) of the hydrogenated block copolymer (A) is 1 to 4.

6. The resin composition according to any of claims 1 to 5, wherein a mass ratio [(a)/(b)] of the polymer block (a) to the polymer block (b) of the hydrogenated block copolymer (A) is 1/99 to 70/30.

7. The resin composition according to any of claims 1 to 6, wherein the aromatic vinyl compound is styrene.

8. The resin composition according to any of claims 1 to 7, wherein the conjugated diene other than farnesene is at least one selected from the group consisting of butadiene, isoprene, and myrcene.

9. The resin composition according to any of claims 1 to 8, wherein the resin composition further comprises a softening agent (C), and an amount of the softening agent (C) is 0.1 to 300 parts by mass based on 100 parts by mass of the hydrogenated block copolymer (A).

10. A molded article consisting of the resin composition according to any of claims 1 to 9.

11. A resin modifier comprising the following hydrogenated block copolymer (A), which is a resin modifier for at least one resin (B) selected from the group consisting of a polyphenylene ether-based resin, a styrene-based resin, an acrylic resin, a polycarbonate-based resin, and a polyamide-based resin:
[Hydrogenated block copolymer (A)]
A hydrogenated block copolymer comprising a polymer block (a) consisting of a structural unit derived from an aromatic vinyl compound and a polymer block (b) containing 1 to 100% by mass of a structural unit (b1) derived from farnesene and containing 99 to 0% by mass of a structural unit (b2) derived from a conjugated diene other than farnesene, 50 mol% or more of a carbon-carbon double bond in the polymer block (b) being hydrogenated.

## INTERNATIONAL SEARCH REPORT

International application No.
PCT/JP2014/082789

A. CLASSIFICATION OF SUBJECT MATTER
*C08L53/02*(2006.01)i, *C08F297/04*(2006.01)i, *C08K5/01*(2006.01)i, *C08L101/00*(2006.01)i

According to International Patent Classification (IPC) or to both national classification and IPC

B. FIELDS SEARCHED

Minimum documentation searched (classification system followed by classification symbols)
C08L53/02, C08F297/04, C08K5/01, C08L25/00-25/18, C08L33/00-33/26, C08L69/00, C08L71/12, C08L77/00-77/12, B32B7/12, C09J7/00-7/04, C09J153/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2012-502136 A (Amyris Biotechnologies, Inc.), 26 January 2012 (26.01.2012), claims; paragraphs [0086], [0100], [0156], [0174], [0182] to [0185], [0191]; examples 4 to 5<br>& US 2010/0056714 A1 & US 2010/0056743 A1<br>& US 2012/0010370 A1 & US 2012/0130033 A1<br>& US 2012/0165474 A1 & US 2012/0244304 A1<br>& WO 2010/027464 A1 & WO 2010/027463 A1<br>& KR 10-2011-0065502 A & CN 102164974 A<br>& KR 10-2011-0065505 A & CN 102203145 A | 1-11 |

☒ Further documents are listed in the continuation of Box C.    ☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 16 February 2015 (16.02.15) | 03 March 2015 (03.03.15) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (July 2009)

**INTERNATIONAL SEARCH REPORT**

International application No. PCT/JP2014/082789

C (Continuation). DOCUMENTS CONSIDERED TO BE RELEVANT

| Category* | Citation of document, with indication, where appropriate, of the relevant passages | Relevant to claim No. |
|---|---|---|
| X | JP 2012-502135 A (Amyris Biotechnologies, Inc.), 26 January 2012 (26.01.2012), claims; paragraphs [0084], [0098], [0114] to [0115], [0123], [0126], [0172], [0181] to [0183], [0214]; examples 4 to 5 & US 2010/0056714 A1 & US 2010/0056743 A1 & US 2012/0010370 A1 & US 2012/0130033 A1 & US 2012/0165474 A1 & US 2012/0244304 A1 & WO 2010/027464 A1 & WO 2010/027463 A1 & KR 10-2011-0065502 A & CN 102164974 A & KR 10-2011-0065505 A & CN 102203145 A | 1-11 |
| E,X<br>E,A | JP 2014-237257 A (Kuraray Co., Ltd., Amyris, Inc.), 18 December 2014 (18.12.2014), claims; paragraphs [0016] to [0022], [0032], [0034] to [0035], [0039] to [0054] (Family: none) | 1-2,4-11<br>3 |
| A | WO 2013/151068 A1 (Kuraray Co., Ltd., Amyris, Inc.), 10 October 2013 (10.10.2013), claims; paragraphs [0009] to [0027]; preparation examples 3 to 4; examples 3 to 4, 7 to 8, 12 to 13 & TW 201402628 A & JP 2014-58666 A & JP 5555814 B | 1-11 |
| A | WO 2013/151069 A1 (Kuraray Co., Ltd., Amyris, Inc.), 10 October 2013 (10.10.2013), claims; paragraphs [0009] to [0025]; preparation examples 3 to 4; examples 3 to 4, 7 to 8, 12 to 13 & TW 201402629 A & JP 2013-237864 A & JP 5555813 B | 1-11 |
| A | JP 2013-532767 A (Amyris, Inc.), 19 August 2013 (19.08.2013), claims & US 2013/0123379 A1 & WO 2012/018682 A1 & AU 2011286019 A & CA 2798299 A & CN 103052664 A & KR 10-2013-0124153 A & ES 2442184 T | 1-11 |
| E,A | JP 2015-30854 A (Tesa SE), 16 February 2015 (16.02.2015), claims; paragraphs [0057] to [0064] (Family: none) | 1-11 |

Form PCT/ISA/210 (continuation of second sheet) (July 2009)

**INTERNATIONAL SEARCH REPORT**

International application No.
PCT/JP2014/082789

C (Continuation). DOCUMENTS CONSIDERED TO BE RELEVANT

| Category* | Citation of document, with indication, where appropriate, of the relevant passages | Relevant to claim No. |
|---|---|---|
| P,A | WO 2013/183570 A1 (Kuraray Co., Ltd., Amyris, Inc.), 12 December 2013 (12.12.2013), claims; paragraphs [0007] to [0054] & TW 201402627 A | 1-11 |
| P,A | WO 2014/156651 A1 (Kuraray Co., Ltd., Amyris, Inc.), 02 October 2014 (02.10.2014), claims; paragraphs [0010] to [0018], [0021] to [0024], [0026] to [0039], [0041] to [0044]; preparation examples 1 to 8; examples 1 to 14 (Family: none) | 1-11 |
| P,A | JP 2014-195609 A (Mitsubishi Chemical Corp., Terumo Corp.), 16 October 2014 (16.10.2014), claims; paragraphs [0031] to [0059], [0089] to [0118] (Family: none) | 1-11 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 10158409 A
- JP 2199127 A
- JP 2012502135 A
- JP 2012502136 A
- JP 2011132298 A